# EUROPÄISCHE PATENTSCHRIFT

(11) **EP 3 568 891 B1**
(45) Veröffentlichungstag und Bekanntmachung des Hinweises auf die Patenterteilung: **02.08.2023**
(21) Anmeldenummer: 17784896.7
(22) Anmeldetag: 02.10.2017
(51) Int. Cl.: H02G 3/00, H02G 3/30

(54) **TRANSPORTEINRICHTUNG UND VERFAHREN ZUR MONTAGE EINES KABELKANALS AN EINER TRANSPORTEINRICHTUNG**
CONVEYING DEVICE AND METHOD FOR MOUNTING A CABLE CONDUIT ON A CONVEYING DEVICE
DISPOSITIF DE TRANSPORT ET PROCÉDÉ POUR MONTER UN CANIVEAU À CÂBLES SUR UN DISPOSITIF DE TRANSPORT

(30) Priorität: 12.01.2017 DE 102017100566
(43) Veröffentlichungstag der Anmeldung: 20.11.2019
(73) Patentinhaber: Krones AG, 93073 Neutraubling (DE)
(72) Erfinder: BINDER, Arthur, 93073 Neutraubling (DE); MEIER, Matthias, 93073 Neutraubling (DE); MUEHLSTEIN, Peter, 93073 Neutraubling (DE); SENN, Konrad, 93073 Neutraubling (DE); LEHNER, Johann, 93073 Neutraubling (DE); WEILHAMMER, Daniel, 93073 Neutraubling (DE)
(74) Vertreter: Schuhbießer, Irmgard Gertrud
(86) Internationale Anmeldenummer: PCT/EP2017/075019
(87) Internationale Veröffentlichungsnummer: WO 2018/130317

(56) Entgegenhaltungen:
- EP-A1- 2 453 540
- DE-U1- 20 211 623
- FR-A1- 2 947 109
- JP-A- H07 117 827
- JP-A- 2003 292 136
- US-A1- 2011 303 434
- US-A1- 2013 199 900

## Beschreibung

Die vorliegende Erfindung bezieht sich auf eine Transporteinrichtung zum Transport von Behältern und/oder Behälterverschlüssen und ein Verfahren zur Montage eines Kabelkanals an einer Transporteinrichtung, welche insbesondere Behälter und/oder Behälterverschlüsse in einer Behälterbehandlungsanlage transportiert.

JP 2003 292136 A zeigt ein Kabeltragelement und eine damit ausgestattete Transporteinrichtung. Das Kabeltragelement hat einen U-förmigen Querschnitt mit einem flachen Halteabschnitt und kann an einem Rahmen der Transporteinrichtung befestigt werden. Hierbei ist das Kabeltragelement derart ausgestaltet, dass Kabel ohne Bündelung und einzeln geführt werden, um Einstrahlungen und damit negative Beeinflussungen der Kabel untereinander zu vermeiden.

In einer Behälterbehandlungsanlage werden Behältergüter, wie beispielsweise Gebinde oder Behälterverschlüsse oder Behälter, insbesondere Flaschen, Dosen, usw., mit einer Transporteinrichtung zwischen verschiedenen Behälterbehandlungsmaschinen oder zu oder weg von Behälterbehandlungsmaschinen transportiert, wie einer Etikettiermaschine, einer Füllmaschine, einem Verschließer, einer Verpackungsmaschine und dergleichen. Je nach Anwendung können mehrere Behälter in einer Reihe nebeneinander auf einem Transportband transportiert werden, im sogenannten Massentransport, oder auch jeweils einzeln in einer Reihe nacheinander in einer Transportrichtung transportiert werden.

Für elektrische Verbindungen zwischen den einzelnen Maschinen in der Behälterbehandlungsanlage werden elektrische Leitungen insbesondere durch mindestens einen Kabelkanal geführt. Es ist möglich, einen solchen Kabelkanal entlang der Transporteinrichtung zu führen. Hierfür kann der Kabelkanal oder die Kabelkanäle beispielsweise an einer Trägerplatte an der Wand befestigt werden. Ist jedoch keine Wand vorhanden, ist es auch denkbar, den Kabelkanal an der Transporteinrichtung zu befestigen. Hierfür ist es derzeit erforderlich, separate Halteelemente für spezielle Kabelkanalhalter vorzusehen. Zur Montage der Kabelkanalhalter an den Halteelementen sind an der Transporteinrichtung zwei Schauben komplett zu lösen, damit ein Kabelkanalhalter zwischen einem Halteelement und einer Beilagscheibe verbaut werden kann. Diese Art der Montage ist zeitaufwändig und daher teuer und infolgedessen nachteilig.

Ein weiterer Nachteil besteht darin, dass Kabelkanalhalter in sehr verschiedenen Formen benötigt werden, um die Möglichkeiten für verschiedene Führungshöhen der Leitungen an der Transporteinrichtung, die bezüglich ihrer Form verschiedenen Kabelkanäle und die verschiedenen Abstände zur Transporteinrichtung abzudecken, wie sie beispielsweise an Kurven auftreten. Als Resultat daraus müssen zur Montage des Kabelkanals am Montageort mehr Kabelkanalhalter als eigentlich nötig vorgehalten werden. Aufgrund dessen sind mehr Kabelkanalhalter als eigentlich nötig an den Montageort zu schicken, damit die richtigen Kabelkanalhalter in der jeweils benötigten Stückzahl vorhanden sind. Dies verursacht hohe Transport- und Lagerkosten.

Daher ist es Aufgabe der vorliegenden Erfindung, eine Transporteinrichtung und ein Verfahren zur Montage eines Kabelkanals an einer Transporteinrichtung bereitzustellen, mit welchen die zuvor genannten Probleme gelöst werden können. Insbesondere sollen eine Transporteinrichtung und ein Verfahren zur Montage eines Kabelkanals an einer Transporteinrichtung bereitgestellt werden, bei welchen der Kabelkanalhalter mit verschiedenen Kabelkanälen kompatibel ist und so gestaltet ist, dass die Montage eines Kabelkanals in einer Behälterbehandlungsanlage für verschiedene Kabelkanäle einfach, flexibel und kostengünstig durchführbar ist.

Diese Aufgabe wird durch eine Transporteinrichtung nach Patentanspruch 1 gelöst. Die Transporteinrichtung hat ein Transportelement zum Kontaktieren mindestens eines Teils der Behälter oder Behälterverschlüsse zumindest abschnittsweise oder zeitweise bei deren Transport in einer vorbestimmten Transportrichtung, wobei das Transportelement an einem Gestell gestützt ist, und mindestens einem Kabelkanalhalter zum Halten eines Kabelkanals, wobei der mindestens eine Kabelkanalhalter zur werkzeuglosen Montage des Kabelkanalhalters an der Transporteinrichtung ausgestaltet ist, und zur werkzeuglosen Aufnahme des Kabelkanals ausgestaltet ist, wie in Anspruch 1 beschrieben.

Bei der Transporteinrichtung ist der Kabelkanalhalter für verschiedene Kabelkanäle kompatibel. In der Praxis können mit dem beschriebenen Kabelkanalhalter in einer Behälterbehandlungsanlage ca. 80% aller auftretenden Montagesituationen abgedeckt werden. Daher verringert sich die Variantenvielfalt der vorzuhaltenden Kabelkanalhalter deutlich.

Ein weiterer Vorteil besteht darin, dass für die Montage des beschriebenen Kabelkanalhalters kein Werkzeug benötigt wird. Daher kann für die Montage des beschriebenen Kabelkanalhalters gegenüber einer Montage, bei der beispielsweise Schrauben mit einem Werkzeug zu lösen sind, anschließend der Kabelkanalhalter einzufädeln ist und dann die Schrauben wieder mit Hilfe von Werkzeug festzuziehen sind, pro Kabelkanalhalter ein beträchtlicher Teil der benötigten Montagezeit eingespart werden. Dies hat eine Verringerung der Montagekosten zur Folge.

Durch die verschiedenen Aussparungen können alle Kabelkanäle selbst oder Träger für den mindestens einen Kabelkanal an dem Kabelkanalhalter sehr einfach, schnell und sicher eingerastet und bei Bedarf zusätzlich mit einer Lasche fixiert werden.

"an einem Gestell gestützt ist" heißt insbesondere, dass das Transportelement an dem Gestell beweglich oder fest angeordnet ist und/oder von diesem getragen wird. Vorteilhafte weitere Ausgestaltungen der Transporteinrichtung sind in den abhängigen Patentansprüchen angegeben.

Vorzugsweise ist der Kabelkanalhalter zur werkzeuglosen Montage von mindestens zwei verschiedenen Kabelkanalgeometrien und/oder zur werkzeuglosen Montage mindestens einer Kabelkanalgeometrie in unterschiedlichen Höhen an dem Kabelkanalhalter und zum Transportelement ausgestaltet.

Bevorzugt ist der Kabelkanalhalter für die werkzeuglose Montage zur formschlüssigen Aufnahme eines Teils des Gestells in mindestens einer Achse des Gestells ausgestaltet Hierbei kann der Kabelkanalhalter derart ausgestaltet sein, dass die formschlüssige Aufnahme durch ein Einhängen an der Transporteinrichtung erfolgt, so dass eine Bewegung des Kabelkanalhalters und/oder des Kabelkanals nur in einer Achse der Transporteinrichtung möglich ist.

Hierbei weist die Montageeinheit möglicherweise im Wesentlichen eine Negativform des geformten Teils des Gestells auf, an dem die Montageeinheit zum Bilden eines Formschlusses zur formschlüssigen Aufnahme einzuhängen ist.

Denkbar ist auch, dass die Montageeinheit eine Aussparung zur formschlüssigen Aufnahme einer Beilagscheibe oder einer Schraube oder Schraubenmutter einer Schraubbefestigung für einen Geländerpfosten an dem Gestell aufweist. Zusätzlich oder alternativ kann die Montageeinheit an einer ersten Seite des Kabelkanalhalters angeordnet sein, die von einer zweiten Seite des Kabelkanalhalters abgewandt ist, an der die mindestens zwei Halteeinheiten angeordnet sind, Zusätzlich oder alternativ kann der Kabelkanalhalter aus einem Stück Blech gebogen sein.

Bevorzugt ist die Montageeinheit an einem Ende des Kabelkanalhalters angeordnet und die mindestens zwei Halteeinheiten sind an dem anderen Ende des Kabelkanalhalters angeordnet.

Es kann auch sein, dass die Montageeinheit aufweist: ein erstes Paar von Haken, die in einer ersten Richtung nebeneinander angeordnet sind und zur formschlüssigen Aufnahme eines Teils des Gestells ausgestaltet sind, und zumindest einen weiteren Haken, der in einer zweiten Richtung, die sich von der ersten Richtung unterscheidet, neben dem ersten Paar von Haken angeordnet ist und zur formschlüssigen Aufnahme eines Teils des Gestells ausgestaltet sind, wobei die Haken beabstandet voneinander an dem einen Ende des Kabelkanalhalters angeordnet sind.

Möglicherweise sind verschieden geformte Halteeinheiten vorhanden, die beabstandet voneinander in einer Reihe nebeneinander an dem Kabelkanalhalter angeordnet sind. Zusätzlich oder alternativ weist die Halteeinheit eine schlitzförmige Aussparung auf, die eine Lasche aufweist und/oder die an ihren beiden Enden eine Vertiefung aufweist, Zusätzlich oder alternativ weist die Halteeinheit eine ovale oder runde Öffnung auf, die benachbart zu einer schlitzförmigen Aussparung an dem Kabelkanalhalter angeordnet ist zur Befestigung weiterer Elemente an dem Kabelkanalhalter.

In einer Ausgestaltung weist die Transporteinrichtung zudem einen Kabelkanal auf, der von dem mindestens einen Kabelkanalhalter gehalten wird und zur Aufnahme eines elektrischen Kabels oder Leitung ausgestaltet ist, und mindestens einen Clip, der zur Aufnahme einer Leitung zur Führung eines flüssigen oder gasförmigen Mediums an dem Kabelkanal ausgestaltet ist, wobei der mindestens eine Clip zum werkzeuglosen Montieren an dem Kabelkanal ausgestaltet ist. Zusätzlich oder alternativ kann der mindestens eine Clip derart an den Kabelkanal angepasst sein, dass der Clip entlang des Kabelkanals an dem Kabelkanal verschiebbar ist oder nicht verschiebbar ist. Zusätzlich oder alternativ kann der mindestens eine Clip zwei Clipshaken aufweisen, die zur werkzeuglosen Montage des Clips an dem Kabelkanal ausgestaltet sind.

Die Aufgabe wird zudem durch ein Verfahren zur Montage eines Kabelkanals an einer Transporteinrichtung nach Patentanspruch 15 gelöst. Die Transporteinrichtung ist zum Transport von Behältern oder Behälterverschlüssen ausgestaltet und weist ein Transportelement auf zum Kontaktieren mindestens eines Teils eines Behälters oder Behälterverschlusses zumindest abschnittsweise oder zeitweise bei deren Transport in einer vorbestimmten Transportrichtung, wobei das Transportelement an einem Gestell gestützt ist. Das Verfahren umfasst die Schritte: werkzeuglos Montieren eines Kabelkanalhalters an der Transporteinrichtung, wobei der Kabelkanalhalter zur werkzeuglosen Montage des Kabelkanalhalters an der Transporteinrichtung ausgestaltet ist, und werkzeuglos Montieren des Kabelkanals an dem Kabelkanalhalter, der zur werkzeuglosen Aufnahme des Kabelkanals ausgestaltet ist, wie in Anspruch 15 beschrieben.

Das Verfahren erzielt die gleichen Vorteile, wie sie zuvor in Bezug auf die Transporteinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 eine dreidimensionale Ansicht einer Transporteinrichtung mit zwei Kabelkanalhaltern gemäß einem ersten Ausführungsbeispiel, an denen ein Kabelkanal aufgenommen ist;
Fig. 2 eine dreidimensionale Ansicht eines Geländerhalters, an dem ein Kabelkanalhalter gemäß dem ersten Ausführungsbeispiel werkzeuglos montierbar ist;
Fig. 3 eine dreidimensionale Ansicht eines Kabelkanalhalters gemäß dem ersten Ausführungsbeispiel;
Fig. 4 eine dreidimensionale Ansicht eines Geländerhalters, der einen Pfosten für ein Geländer der Transporteinrichtung aufnimmt und an dem ein Kabelkanalhalter gemäß dem ersten Ausführungsbeispiel montiert ist, der einen Kabelkanal aufnimmt;
Fig. 5 eine Seitenansicht des Geländerhalters mit Pfosten und Kabelkanalhalter mit Kabelkanal in Bezug auf Fig. 4;
Fig. 6 eine dreidimensionale Ansicht einer Transporteinrichtung mit zwei Kabelkanalhaltern gemäß dem ersten Ausführungsbeispiel, an denen alternativ ein anderer Kabelkanal als in Fig. 1 aufgenommen ist;
Fig. 7 eine dreidimensionale Detailansicht einer Transporteinrichtung mit zwei Kabelkanalhaltern gemäß dem ersten Ausführungsbeispiel, an denen ein Kabelkanal mit Trennsteg aufgenommen ist;
Fig. 8 eine Teilschnittansicht der Transporteinrichtung mit Kabelkanalhalter, an dem ein Kabelkanal mit Trennsteg und Schlauchhalter aufgenommen ist;
Fig. 9 bis Fig. 11 jeweils eine dreidimensionale Ansicht einer speziellen Ausführungsvariante eines Schlauchhalters gemäß dem ersten Ausführungsbeispiel;
Fig. 12 eine dreidimensionale Ansicht eines Kabelkanalhalters gemäß einem zweiten Ausführungsbeispiel;
Fig. 13 eine dreidimensionale Teilansicht eines Geländerhalters, der einen Pfosten für ein Geländer der Transporteinrichtung aufnimmt und an dem ein Kabelkanalhalter gemäß dem zweiten Ausführungsbeispiel montiert ist, der einen Kabelkanal aufnimmt;
Fig. 14 eine dreidimensionale Ansicht eines Kabelkanalhalters gemäß einem dritten Ausführungsbeispiel;
Fig. 15 eine dreidimensionale Ansicht eines Geländerhalters, der einen Pfosten für ein Geländer der Transporteinrichtung aufnimmt und an dem ein Kabelkanalhalter gemäß dem dritten Ausführungsbeispiel montiert ist, der einen Kabelkanal aufnimmt; und
Fig. 16 eine Seitenansicht des Geländerhalters mit Pfosten und Kabelkanalhalter mit Kabelkanal von Fig. 15.

In den Figuren sind gleiche oder funktionsgleiche Elemente, sofern nichts anderes angegeben ist, mit denselben Bezugszeichen versehen.

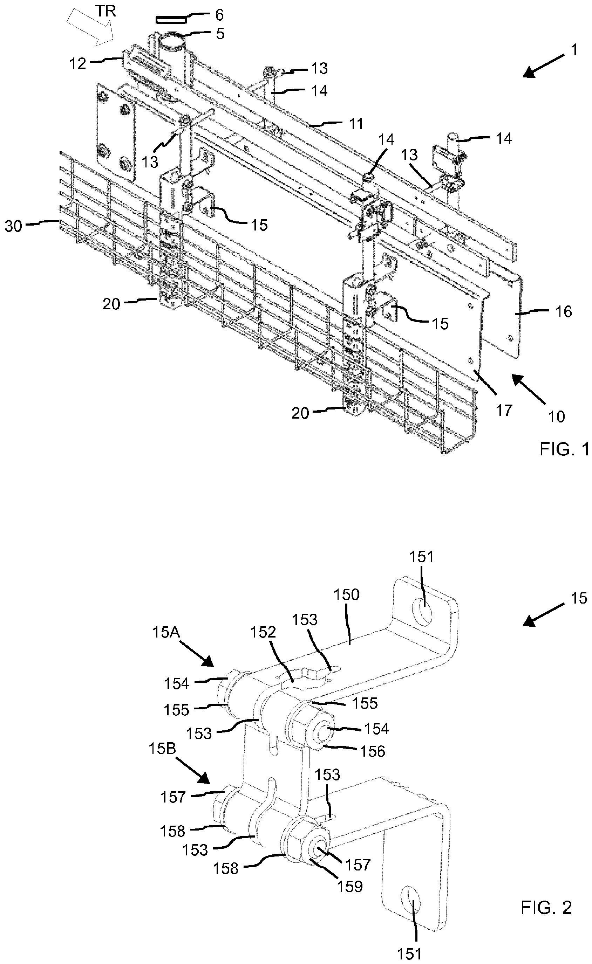

Fig. 1 zeigt eine Transporteinrichtung 1, die zum Transport von Behältern 5 und/oder Behälterverschlüssen 6 ausgestaltet ist. Die Behälter 5 und/oder Behälterverschlüsse 6 können einzeln oder verpackt in Verpackungseinheiten, wie Gebinde, Kartons, usw. transportiert werden. Die Transporteinrichtung 1 kann Teil einer Behälterbehandlungsanlage sein, in welcher die Behälter 5 behandelt werden, wie etikettiert und/oder bedruckt, mit einem Produkt gefüllt, mit dem Behälterverschluss 6 verschlossen, verpackt, inspiziert, usw. oder mit der Transporteinrichtung 1 transportiert werden. Die Behälter 5 sind insbesondere transparente oder nichttransparente Behälter, Kunststoffflaschen, Glasflaschen, Metalldosen, leer, voll, verschlossen, unverschlossen, etikettiert, nicht etikettiert, bedruckt usw. Die Behälter 5 können jedoch auch beispielsweise Kisten, Kartons, Pakete, usw. sein.

Die Transporteinrichtung 1 hat ein Gestell 10, an dem bei der Ansicht von Fig. 1 zwei Kabelkanalhalter 20 beabstandet voneinander montiert sind und einen Kabelkanal 30 halten oder aufnehmen. Das Gestell 10 hat ein erstes Geländer 11 und ein zweites Geländer 12, die im Wesentlichen parallel zueinander angeordnet sind, so dass der Behälter 5 zwischen dem ersten und zweiten Geländer 11, 12 geführt werden kann. Das erste und zweite Geländer 11, 12 ist jeweils mit Haltestangen 13 an Geländerpfosten 14 befestigt, die in Geländerhaltern 15 aufgenommen sind. Die Geländerhalter 15 sind an Trägern 16, 17 befestigt, auch wenn die Geländerhalter 15 an dem Träger 16 in Fig. 1 nicht sichtbar ist.

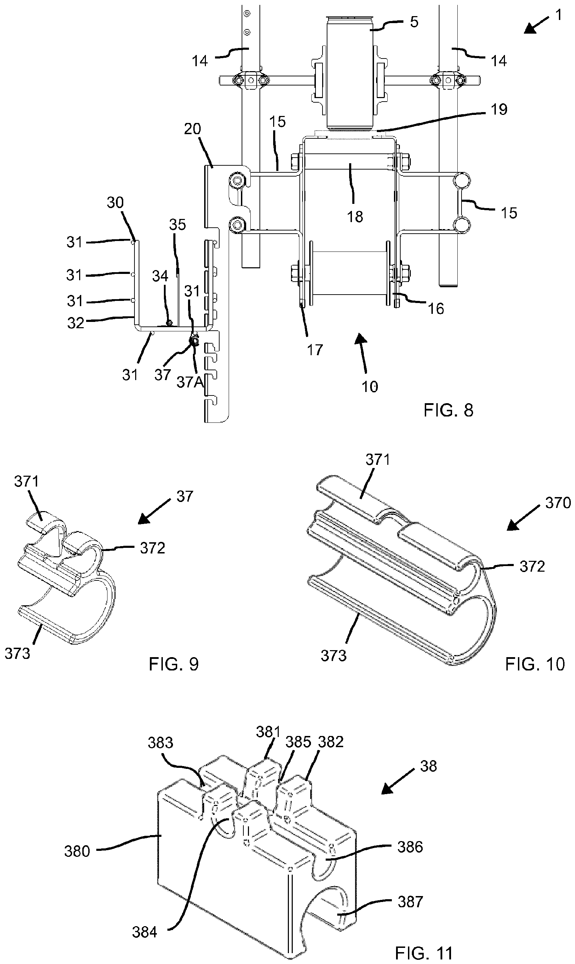

Die Behälter 5 werden mit Hilfe eines in Fig. 1 nicht sichtbaren Transportbands 19 (Fig. 8) entlang des ersten und zweiten Geländers 11, 12 an den Trägern 16, 17 in einer vorbestimmten Transportrichtung TR transportiert, die in Fig. 1 durch einen weißen Blockpfeil veranschaulicht ist. Somit sind das erste und zweite Geländer 11, 12, das Transportband 19 (Fig. 8) und gegebenenfalls die Träger 16, 17 jeweils ein Transportelement, welches die Behälter 5 bei deren Transport in der vorbestimmten Transportrichtung TR kontaktiert. Hierbei ist das Gestell 10 mit den Trägern 16, 17, den Haltestäben 13 und den Geländerpfosten 14 zum Lagern des ersten und zweiten Geländers 11, 12 als Transportelemente ausgestaltet.

Das Transportelement kann also beispielsweise ein Führungsgeländer sein, das die Behälter 5 und/oder Behälterverschlüsse 6 beispielsweise an deren Seite kontaktiert, wenn diese durch eine Kurve transportiert werden oder durch Staudruck an das Geländer 11, 12 gedrückt werden. Es kann sich bei dem Transportelement aber auch um ein Transportband 19 (Fig. 8) handeln, auf welchem die Behälter 5 stehend transportiert werden. In beiden Fällen wird gegebenenfalls nur ein Abschnitt des Behälters 5 und/oder des Behälterverschlusses 6, wie beispielsweise der Behälterboden oder ein Abschnitt der Behälterseitenwand in vertikaler oder horizontaler Richtung des Behälters 5 usw,, kontaktiert. Bei einem Massentransport der Behälter 5 und/oder Behälterverschlüsse 6, bei welchem mehr als ein Behälter 5 zwischen zwei voneinander beabstandeten Geländern 11, 12 aufgenommen werden kann, können die Geländer 11, 12 als Transportelement die Behälter 5 und/oder Behälterverschlüsse 6 auch nur zeitweise kontaktieren, da der Behälter 5 in diesem Fall auch nur an dem Transportband und nicht an den Geländern 11, 12 geführt werden kann.

Fig. 2 stellt den Geländerhalter 15 genauer dar. Der Geländerhalter 15 hat einen C-förmig ausgebildeten Grundkörper 150, dessen Enden jeweils laschenförmig umgebogen sind. In den Enden des Grundkörper 150 sind jeweils Öffnungen 151 vorgesehen, durch welche ein nicht dargestelltes Befestigungselement gesteckt werden kann, um den Geländerhalter 15 an einem der Träger 16, 17 der Transporteinrichtung 1 von Fig. 1 zu montieren und dadurch zu befestigen.

Zudem hat der Geländerhalter 15 gemäß Fig. 2 zwei Pfostenaufnahmeöffnungen 152, die in schlitzförmigen Aussparungen 153 angeordnet sind. In Fig. 2 ist nur eine der zwei Pfostenaufnahmeöffnungen 152 sichtbar. Die schlitzförmigen Aussparungen 153 reichen an ihrem einen Ende bis zu einer ersten Schraubbefestigung 15A oder einer zweiten Schraubbefestigung 15B, mit welchen die schlitzförmigen Aussparungen 153 verengt werden können, um einen in Fig. 1 gezeigten Geländerpfosten 14 in den Pfostenaufnahmeöffnungen 152 von Fig. 2 zu fixieren. Hierfür hat die erste Schraubbefestigung 15A eine Schraube 154, zwei Beilagscheiben 155 und eine Schraubenmutter 156. Die Schraube 154 ist durch eine Beilagscheibe 155 und dann von einer Seite durch einen ersten hohlzylinderförmigen Teil des Grundkörpers 150 gesteckt. Das hohlzylinderförmige Teil des Grundkörpers 150 ist kein komplett nach innen hin geschlossener Hohlzylinder. Daher liegt die jeweilige Beilagscheibe 155 nur mit einem Teil ihrer Fläche an dem Geländerhalter 15 an. Auf der anderen Seite des hohlzylinderförmigen Teils des Grundkörpers 150 liegt die zweite Beilagscheibe 155 an. Die Schraube 154 und die zwei Beilagscheiben 155 werden mit der Schraubenmutter 156 befestigt, die auf ein nicht sichtbares Schraubgewinde der Schraube 154 aufgeschraubt wird. Alternativ können die Schraube 154 und die Schraubenmutter 156 als zwei separate Schrauben ausgeführt sein, die in den Geländerhalter 15 geschraubt werden.

Die zweite Schraubbefestigung 15B hat eine Schraube 157, zwei Beilagscheiben 158 und eine Schraubenmutter 159. Die zweite Schraubbefestigung 15B ist auf die gleiche Weise wie die erste Schraubbefestigung 15A an einem zweiten hohlzylinderförmigen Teil des Grundkörpers 150 montiert, wie in Fig. 2 veranschaulicht. Alternativ können die Schraube 157 und die Schraubenmutter 159 als zwei separate Schrauben ausgeführt sein, die in den Geländerhalter 15 geschraubt werden.

Der Geländerhalter 15 dient somit zur Fixierung des von oben in den Geländerhalter 15 eingeführten Geländerpfostens 14 in zwei Punkten kraftschlüssig, indem der Geländerpfosten 14 über die Schrauben 154, 157 in den Geländerhalter 15 geklemmt wird. Diese Schrauben 154, 157 und/oder die zwischen dem Geländerhalter 15 und dem Schraubenkopf eingeführte Beilagscheiben 155, 158 dienen als Punkt für das Aufstecken des Kabelkanalhalters 20. Somit wird der Kabelkanalhalter 20 durch einen Formschluss mit dem Geländerhalter 15 fixiert und vertikal zur Transportebene montiert. Steht die Transporteinrichtung 1 von Fig. 1 gerade, weist der Kabelkanalhalter 20 vorzugsweise in einem Winkel von 90° nach unten, wie im Folgenden ausführlicher beschrieben.

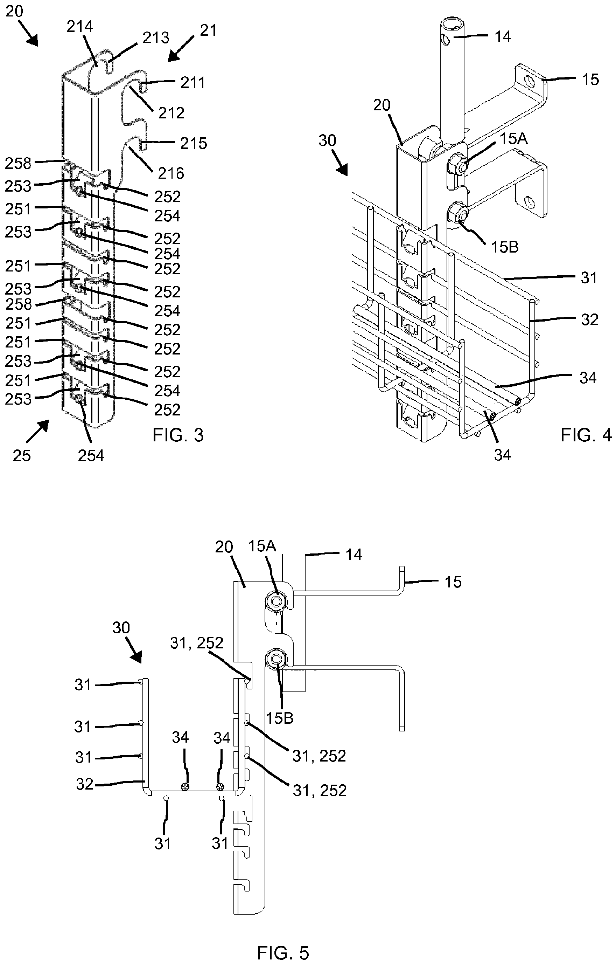

Fig. 3 zeigt den Kabelkanalhalter 20 genauer, an dem eine Montageeinheit 21 und eine Vielzahl von Halteeinheiten 25 vorgesehen sind. Die Montageeinheit 21 ist an einem Ende des Kabelkanalhalters 20 angeordnet. Die Vielzahl von Halteeinheiten 25 ist an dem anderen Ende des Kabelkanalhalters 20 angeordnet. Außerdem ist die Montageeinheit 21 an einer ersten Seite des Kabelkanalhalters 20 angeordnet, die von einer zweiten Seite des Kabelkanalhalters 20 abgewandt ist, an der die Halteeinheiten 25 angeordnet sind.

Der Kabelkanalhalter 20 ist vorzugsweise aus einem Stück geformt. Beispielsweise ist der Kabelkanalhalter 20 aus einem Blech oder Blechbiegeteil geformt, das nach einem Ausstanzen der gewünschten Formen für die Montageeinheit 21 und die Halteeinheiten 25 aus dem planaren Blech in die erfindungsgemäße U-Form gebogen wird, wie in Fig. 3 gezeigt. An dem Boden und/oder den zwei Schenkeln der U-Form sind erfindungsgemäß die Halteeinheiten 25 angeordnet.

Die Montageeinheit 21 ist weiter erfindungsgemäß in den zwei Schenkeln der U-Form angeordnet.

Die Montageeinheit 21 hat einen ersten Haken 211, der eine erste halbkreisförmige Aussparung 212 bildet, einen zweiten Haken 213, der eine zweite halbkreisförmige Aussparung 214 bildet, einen dritten Haken 215, der eine dritte halbkreisförmige Aussparung 216 bildet, und einen in Fig. 3 nicht sichtbaren vierten Haken, der eine vierte halbkreisförmige Aussparung bildet. Je nach Anwendung kann der vierte Haken jedoch entfallen. Die Montageeinheit 21, genauer gesagt ihre drei oder vier Aussparungen 212, 214, 216, ist bzw. sind an die Form der ersten und zweiten Schraubbefestigung 15A, 15B von Fig. 4 angepasst. Noch genauer, sind die drei oder vier Aussparungen 212, 214, 216 jeweils an die äußere Form oder Geometrie einer Beilagscheibe 155, 158 oder einer Schraube 154, 157 oder Schraubenmutter 156, 159 angepasst. Daher kann die Montageeinheit 21 formschlüssig an der ersten und zweiten Schraubbefestigung 15A, 15B befestigt werden, wie in Fig. 4 gezeigt. Die Befestigung kann werkzeuglos erfolgen, indem die Montageeinheit 21 mit ihrem ersten und zweiten Haken 211, 213 auf die Beilagscheiben 155 oder die Schraube 154 oder die Schraubenmutter 156 gesetzt wird und mit ihrem dritten Haken 215 und dem nicht abgebildeten vierten Haken auf die Beilagscheiben 158 oder die Schraube 157 oder die Schraubenmutter 159 gesetzt wird. Je nach Ausgestaltung der Haken 211, 213, 214 und Aussparungen 212, 214, 216 kann ein leichter Presssitz vorteilhaft sein. Hierfür hat der jeweilige Innendurchmesser der Aussparungen 212, 214, 216 einen geringfügig kleineren Wert als der Außendurchmesser der Beilagscheiben 155, 158 oder Schrauben 154, 157 oder Schraubenmuttern 156, 159.Es ist außerdem denkbar, dass die Haken 211, 213, 215 oder Aussparungen 212, 214, 216 an jede andere hier nicht beschriebene Form angepasst werden und somit jeweils als Gegenstück zu der Form ausgebildet sind.

Gemäß Fig. 3 hat jede der Halteeinheiten 25 eine schlitzförmige Aussparung 251 oder eine schlitzförmige Aussparung 258, die jeweils an ihren beiden Enden eine Vertiefung 252 aufweist. Die Vertiefungen 252 sind jeweils an Seiten des Kabelkanalhalters 20 vorgesehen die quer zu der Seite des Kabelkanalhalters 20 angeordnet sind, welche dem Kabelkanal 30 zugewandt ist, wenn der Kabelkanal 30 an dem Kabelkanalhalter 20 montiert ist. Bei einem Teil der schlitzförmigen Aussparungen 251, 258 sind an ihrem einen Rand, nämlich in der Mitte zwischen den beiden Vertiefungen 252, zwei Schnitte oder Trennlinien quer zu dem Rand der Aussparung 251, 258 vorgesehen, so dass sich eine Lasche 253 bildet. In Fig. 3 sind die Laschen 253 jeweils in Richtung der zugehörigen Vertiefungen 252 gebogen, wobei die Biegelinie der Laschen 253 in etwa parallel zu den schlitzförmigen Aussparungen 251, 258 angeordnet ist. Die Laschen 253 sind dadurch außerdem jeweils in Richtung der Montageeinheit 21 gebogen. In den Laschen 253 ist jeweils eine Perforierung oder Öffnung 254 vorgesehen, die bei dem abgebildeten Beispiel als runde Öffnung ausgestaltet ist. An den Öffnungen 254 sind jeweils weitere Teile befestigbar, die sonst aufgrund der Montage des Kabelkanals 30 aufwändig umgangen werden müssten.

Die schlitzförmigen Aussparungen 251, 258 sind jeweils in etwa parallel zueinander angeordnet. Jedoch haben die schlitzförmigen Aussparungen 251, 258 bei dem Beispiel von Fig. 3 eine unterschiedliche Breite. Außerdem ist der Abstand der schlitzförmigen Aussparungen 251, 258 unterschiedlich. Die Breite und der Abstand richten sich danach, welcher Kabelkanal 30 mit dem Kabelkanalhalter 20 zu halten ist. Vorzugsweise wird die Anzahl, Breite und Abstand der Aussparungen 251, 258 so gewählt, dass eine möglichst große Anzahl unterschiedlicher Kabelkanäle 30 mit dem Kabelkanalhalter 20 gehalten werden kann. Dabei ist es möglich, dass dieselbe Aussparung 251, 258 zum Halten mehrerer Kabelkanäle 30 unterschiedlicher Geometrie genutzt wird, um die Anzahl der notwendigen Aussparungen 251, 258 trotz hoher Variabilität des Kabelkanalhalters möglichst gering zu halten. Zumindest eine, insbesondere in der Schlitzhöhe höhere Aussparung, wie die Aussparungen 258, kann für die Aufnahme eines nicht dargestellten Kabelkanaldeckels vorgesehen sein. Die Halteeinheiten 25 sind somit beabstandet voneinander in einer Reihe nebeneinander an dem Kabelkanalhalter 20 angeordnet.

Selbstverständlich sind auch andere Ausgestaltungen des Kabelkanalhalters 20 möglich, die eine werkzeuglose Montage von mindestens zwei verschiedenen Kabelkanalgeometrien und/oder zur werkzeuglosen Montage mindestens einer Kabelkanalgeometrie in unterschiedlichen Höhen an dem Kabelkanalhalter 20 und zum Geländer 11, 12 oder zum Transportband 19 (Fig. 8) ausgestaltet ist, wie auch noch später beschrieben.

Fig. 4 zeigt ein Beispiel für einen gitterförmigen Kabelkanal 30, der quer zum Geländerpfosten 14 angeordnete Gitterstäbe 31 und U-förmige Gitterstäbe 32 aufweist. Die Gitterstäbe 31 sind auch quer zu den U-förmigen Gitterstäben 32 angeordnet. Die Gitterstäbe 31 sind jeweils in etwa parallel zueinander angeordnet. Die U-förmigen Gitterstäbe 32 sind jeweils in etwa parallel zueinander angeordnet. Der abgebildete Kabelkanal 30 hat an seinen Seitengitterwänden und an seinem Gitterboden jeweils die gleichen Abmessungen. Jedoch können die Abmessungen an seinen Seitengitterwänden und an seinem Gitterboden auch zumindest teilweise unterschiedlich sein. In dem Kabelkanal 30 können elektrische Kabel oder Leitung(en) 34 aufgenommen werden, wie in Fig. 4 sehr schematisch gezeigt.

Wird der Kabelkanal 30 mit einer seiner Seitenwände werkzeuglos in den Kabelkanalhalter 20 so weit eingeschoben, bis die Gitterstäbe 31 in den Vertiefungen 252 angeordnet sind, kann der Kabelkanal 30 sicher an dem Kabelkanalhalter 20 aufgenommen werden. Auf diese Weise kann der Kabelkanal 30 nicht einfach aus dem Kabelkanalhalter 20 herausrutschen. Dies ist auch aus Fig. 5 noch besser ersichtlich. Durch vorzugsweise werkzeugloses ,Umbiegen der Laschen 253 in Richtung der Vertiefungen 252 und damit der Gitterstäbe 31 kann der Kabelkanal 30 noch fester an dem Kabelkanalhalter 20 fixiert werden. Die Laschen 253 bieten somit eine weitere Sicherung des Kabelkanals 30 an dem Kabelkanalhalter 20.

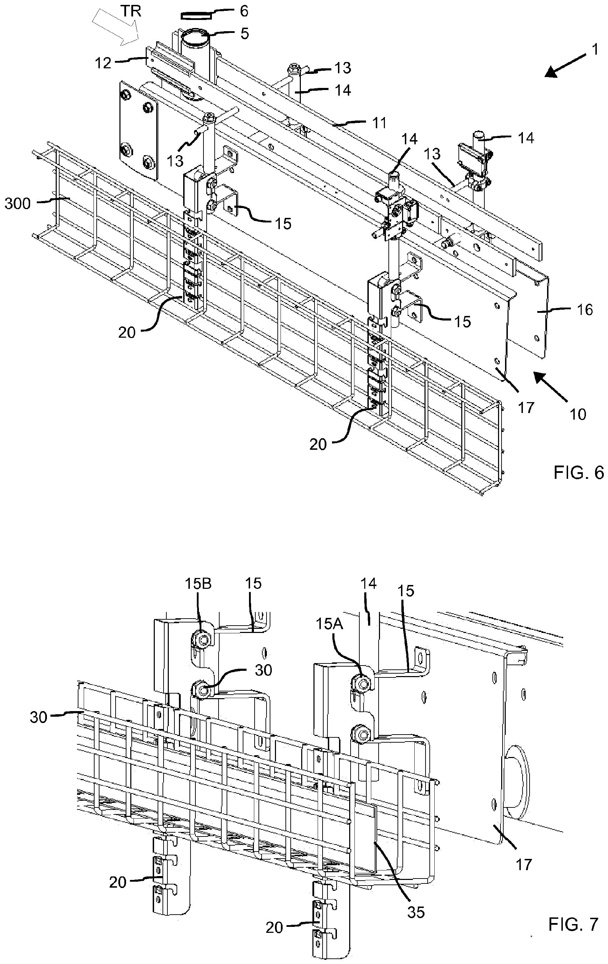

Fig. 6 zeigt einen alternativen Kabelkanal 300, der an der Transporteinrichtung 1 aufgenommen werden kann. Auch der Kabelkanal 300 ist U-förmig ausgebildet. Jedoch haben die Seitengitterwände des Kabelkanals 300 eine geringere Höhe als der Gitterboden des Kabelkanals 300 breit ist. Zudem ist der Kabelkanal 300 mit seinem Boden in die Halteeinheiten 25 der Kabelkanalhalter 20 eingeschoben und somit an seinem Boden an den Kabelkanalhaltern 20 fixiert.

Fig. 7 und Fig. 8 zeigen den Kabelkanal 30, der zusätzlich mit einem Trennsteg 35 ausgestattet ist. Der Trennsteg 35 ist vorzugsweise ebenfalls einstückig ausgebildet. Der Trennsteg 35 wird längs in den Kabelkanal 30 eingebracht, wie in Fig. 7 und Fig. 8 gezeigt, um beispielweise Signal- von Stromleitungen bzw. Starkstromkabel von Schwachstromleitungen zu trennen. Die Starkstromkabel können beispielsweise Ströme in Bezug auf Spannungen zwischen 110 und 400 V führen. Die Schwachstromleitungen können beispielsweise Ströme in Bezug auf Spannungen bis 48 V führen. Sowohl die Starkstromkabel als auch die Schwachstromleitungen können mindestens eine Ader aufweisen. Es sind jedoch auch andere Trennungen von Kabeln oder Leitungen 34 (Fig. 4) möglich, beispielsweise elektrische Kabel oder Leitungen für eine Etikettiermaschine getrennt durch den Trennsteg von elektrischen Kabeln oder Leitungen 34 (Fig. 4) für eine Inspektionsmaschine, usw.

Der Trennsteg 35 kann L-förmig ausgebildet sein und im Bodenbereich mit einer Lasche versehen sein. Vorzugsweise ist der Trennsteg 35 so ausgebildet, dass der vertikal verlaufende Schenkel nach erfolgter Montage rechtwinklig zum Boden des Kabelkanals 30 ausgerichtet ist. Die im Boden vorgesehene Lasche verhindert wie in Fig. 8 zu sehen, dass der Kabelkanal 30 durch Krafteinwirkung nach rechts in Richtung des Kabelkanalhalters 20 kippt. Der parallel zum Boden des Kabelkanals 30 verlaufende Schenkel des L-förmigen Trennstegs 35 verhindert im Zusammenspiel mit der Lasche analog ein Kippen nach links.

Der Trennsteg 35 kann durch eine Lasche im Bodenbereich am Kabelkanal 30 befestigt werden. Die eigentliche Befestigung erfolgt durch eine "Einrast-Bewegung" in Längsrichtung oder alternativ in Querrichtung, je nachdem wie die Lasche ausgeführt ist.

In Fig. 8 ist außerdem ein Clip 37 gezeigt, der unten an dem Kabelkanal 30, also außerhalb des Kabelkanals 30, an einem der Gitterstäbe 31 werkzeuglos montiert ist. Der Clip 37 kann beispielsweise eine Leitung 37A zum Führen eines flüssigen oder gasförmigen Mediums aufnehmen, insbesondere einen Bandschmierungsschlauch, in dem Bandschmiermittel geführt wird. Das Bandschmiermittel wird benötigt, um den Reibwert zwischen den Behältern 5 als Transportgut und der Transportoberfläche zu verringern. Die Transportoberfläche kann als Transportband 19 realisiert sein,, so dass sich die Behälter 5 mit dem Transportband 19 in der Transportrichtung TR bewegen, wie zuvor in Bezug auf Fig. 1 beschrieben.

Wie in Fig. 9 veranschaulicht, hat der Clip 37 einen ersten und zweiten Clipshaken 371, 372, die jeweils zum teilweisen Umgreifen eines der Gitterstäbe 31 ausgestaltet sind. Daher sind die Clipshaken 371, 372 jeweils an einer Seite ihrer Länge nach offen. Die Clipshaken 371, 372 bilden jeweils eines Hohlzylindersegment. Die Clipshaken 371, 372 sind beabstandet zueinander an der Außenwand eines weiteren Hohlzylindersegments angeordnet, das eine Leitungsaufnahme 373 bildet. Die Leitung 37A kann ebenfalls werkzeuglos in die Leitungsaufnahme 373 eingeschoben werden. Hierfür ist die Leitungsaufnahme 373 seitlich ihrer Länge nach offen.

Auf diese Weise ist gewährleistet, dass das flüssige Medium in der Leitung 37A getrennt von stromführenden Leitungen geführt wird, was je nach örtlichen Bestimmungen vorgeschrieben ist. Darüber hinaus erlaubt diese Art der Montage eine bessere Zugänglichkeit bei der initialen Montage und/oder einem späteren Zugriff durch einen Bediener.

Sind mehrere Clips 37 beabstandet voneinander entlang der Gitterstäbe 31 an dem Kabelkanal 30 oder 300 vorgesehen, kann eine Leitung 37A sehr einfach an dem Kabelkanal 30 oder 300 montiert werden und sicher und somit vorteilhaft an dem Kabelkanal 30 oder 300 entlang insbesondere der gesamten Transporteinrichtung 1 geführt werden. Gegenüber einer festen Verrohrung der Leitung 37A bedeuten die Clips 37 eine deutliche Vereinfachung und Beschleunigung der Verlegung der Leitung 37A.

Da der Clip 37 in dem Bereich, in dem er am Kabelkanal 30 werkzeuglos eingeclipst wird, zweiteilig ausgebildet ist, kann der Clip 37 so angebracht werden, dass er nicht entlang des Kabelkanals 30 verrutschen kann oder verschoben werden kann. Hierfür können die Clipshaken 371, 372 auf zwei Seiten eines Gitterstabs 32 an einem Gitterstab 31 angebracht werden. Dadurch sind definierte Abstände zwischen den Montagepunkten der Clip 37 realisierbar, so dass ein Durchhängen der Leitung 37A verhindert wird. Dies ermöglicht eine schnelle, saubere und eindeutige Verlegung der Leitung 37A. Je nach Bedarf kann der Clip 37 aber auch zwischen zwei Gitterstäben 32 an einem Gitterstab 31 angebracht werden, wenn es möglich sein soll der Clip entlang des Gitterstabs 31 verschieben zu können.

Anstelle einer Leitung 37A kann der Clip 37 ein Kabel oder ein sonstiges Teil wenigstens mittelbar aufnehmen, das an dem Kabelkanal 30 oder dem Kabelkanal 300 geführt werden soll.

Fig. 10 zeigt einen Clip 370, der bis auf die Abmessungen der Clipshaken 371, 372 und der Leitungsaufnahme 373 auf die gleiche Weise ausgeführt ist, wie der Clip 37 von Fig. 9. Der Clip 370 von Fig. 10 ist in Längsrichtung länger als der Clip 37 von Fig. 9. Dadurch hat der Clip 370 eine größere Stabilität und dadurch bessere Funktion als der Clip 37 von Fig. 9

Fig. 11 zeigt eine Variante eines Clips 38, der an einer Kreuzung von zwei Gitterstäben 31, 32 des Kabelkanals 30 oder 300 werkzeuglos montierbar ist. Hierfür hat der Clip 38 einen kastenförmigen Grundkörper 380, an welchem an einer Seite vier Vorsprünge 381, 382, 383, 384 auskragen, zwischen denen Aussparungen 385, 386 vorgesehen sind. Die Aussparungen 385, 386 sind in ihrer Form an die runden Gitterstäbe 31, 32 angepasst. Zudem sind die Aussparungen 385, 386 kreuzförmig zueinander angeordnet. Hierbei ist die Aussparung 385 zwischen den vier Vorsprüngen 381, 382, 383, 384 vorgesehen, wobei die Aussparung 386 tiefer im Grundkörper 380 angeordnet ist als die Aussparung 385. Dadurch kann der Clip 38 vorteilhaft an einem "Kreuzungsbereich" zweier Gitterstäbe 31, 32 des Gitterkabelkanals 30, 300 zum Einsatz kommen. An einer Leitungsaufnahme 387 kann die Leitung 37A werkzeuglos aufgenommen werden.

Somit ist eine Transporteinrichtung 1 zum Transport von Behältern 5 gezeigt, an der ein C-förmiger Geländerhalter 15 angeordnet ist, der ein Geländer 11, 12 kraftschlüssig in zwei Punkten fixieren kann. An dem Geländerhalter 15 ist ein Kabelkanalhalter 20 werkzeuglos aufsteckbar, wobei der Kabelkanalhalter 20 durch seine an die Geometrie oder Form des Geländerhalters 15 angepasste Geometrie oder Form formschlüssig fixiert wird. Dadurch erfolgt auch eine Ausrichtung des Kabelkanalhalters 20 in einem Winkel von 90° zu der Transporteinrichtung 1, insbesondere ihrem Transportband. Der Kabelkanalhalter 20 hat mit den Halteeinheiten 25 Aussparungen oder Ausnehmungen für verschiedene Kabelkanäle 30, 300, so dass die Kabelkanäle 30, 300 jeweils ebenfalls werkzeuglos an dem jeweiligen Kabelkanalhalter 20 anbringbar sind. Noch dazu ist bei Bedarf am Kabelkanal 30, 300 mindestens ein werkzeuglos anbringbarer Clip in Form der Clip 37, 38, 380 montierbar, wie zuvor beschrieben.

Der große Vorteil des beschriebenen Kabelkanalhalters 20 und/oder der Clip 37, 38, 380 und der Transporteinrichtung 1 ist, dass Monteure bei der Montage der Transporteinrichtung 1 nur mehr einen Bruchteil der Zeit für die Installation der Kabelkanäle 30, 300 und/oder der Clip 37, 38, 380 als bei einer herkömmlichen Montage benötigen. Dies ist an sinkenden Kosten für die Inbetriebnahme der Transporteinrichtung 1 deutlich wahrnehmbar.

Bei einem Verfahren zur Montage des Kabelkanals 30 oder 300 an der Transporteinrichtung 1 wird demzufolge zuerst mindestens ein Kabelkanalhalter 20 mit deren Montageeinheit montiert, wie zuvor beschrieben. Vorzugsweise wird anschließend der Kabelkanal 30 oder 300 in mindestens zwei Halteeinheiten 25 des Kabelkanalhalters 20 werkzeuglos montiert, wie zuvor beschrieben. Es ist jedoch auch möglich, dass an dem Kabelkanal 30 oder 300 bereits mindestens ein Kabelkanalhalter 20 montiert ist, bevor der Kabelkanalhalter 20 mit seiner Montageeinheit 21 an dem Gestell 10 der Transporteinrichtung 1 montiert wird.

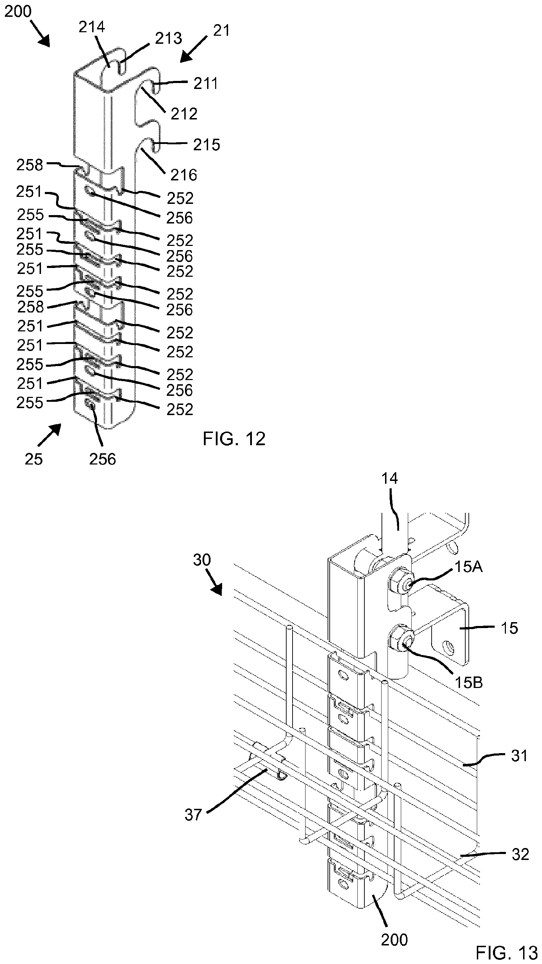

Fig. 12 zeigt einen Kabelkanalhalter 200 gemäß einem zweiten Ausführungsbeispiel. Der Kabelkanalhalter 200 ist weitestgehend auf die gleiche Weise ausgeführt wie der Kabelkanalhalter 20 gemäß dem vorangehenden Ausführungsbeispiel.

Im Unterschied zu dem Kabelkanalhalter 20 gemäß dem vorangehenden Ausführungsbeispiel hat der Kabelkanalhalter 200 gemäß dem vorliegenden Ausführungsbeispiel jedoch Laschen 255, die in etwa parallel zu den schlitzförmigen Aussparungen 251, 258 angeordnet sind. Die Laschen 255 sind in etwa in der Mitte der schlitzförmigen Aussparungen 251, 258 angeordnet. Die Laschen 255 können in Richtung der Vertiefungen 252 entlang einer Biegelinie gebogen werden, die in etwa vertikal zu den schlitzförmigen Aussparungen 251, 258 angeordnet ist. Dadurch können die Laschen 255 auch jeweils in Richtung der Montageeinheit 21 an dem Kabelkanalhalter 200 gebogen werden.

Zwischen einer schlitzförmigen Aussparung 251, 258 und einer Lasche 255 sind Perforierungen oder Öffnungen 256 in Form einer ovalen Öffnung vorgesehen. An den Öffnungen 256 sind weitere Teile befestigbar wie z. B. Ausleger, die sonst aufgrund der Montage des Kabelkanals 30 aufwändig umgangen werden müssten. Auch ist es denkbar, Trennsteg(e) 35 für einen Kabelkanal 30, wie er in Fig. 6 zu sehen ist, statt am Kabelkanal 30 selbst, an den Öffnungen 256 anzubringen.

Gemäß Fig. 13 kann auch an dem Kabelkanalhalter 200 ein Kabelkanal 30 montiert werden. Ebenso ist an dem Kabelkanalhalter 200 eine Montage eines Kabelkanals 300 möglich, auch wenn dies in den Figuren nicht gezeigt ist.

Somit ist die Transporteinrichtung 1 auch bei dem zweiten Ausführungsbeispiel auf die gleiche Weise ausgeführt, wie zuvor in Bezug auf das erste Ausführungsbeispiel beschrieben.

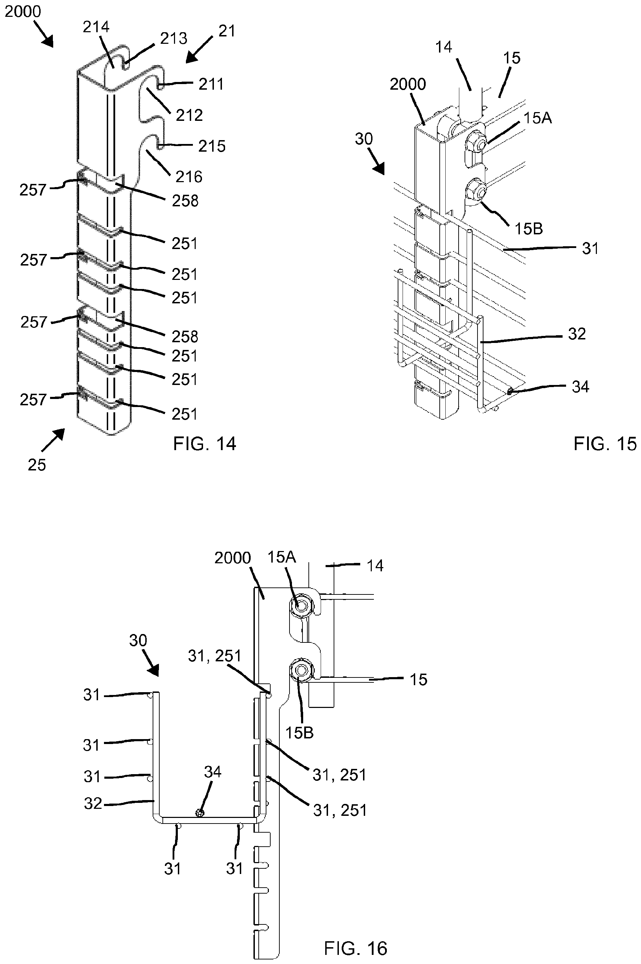

Fig. 14 bis Fig. 16 zeigen einen Kabelkanalhalter 2000 gemäß einem dritten Ausführungsbeispiel. Der Kabelkanalhalter 2000 ist weitestgehend auf die gleiche Weise ausgeführt wie der Kabelkanalhalter 200 gemäß dem vorangehenden Ausführungsbeispiel.

Im Unterschied zu dem Kabelkanalhalter 200 gemäß dem vorangehenden Ausführungsbeispiel hat der Kabelkanalhalter 2000 gemäß dem vorliegenden Ausführungsbeispiel jedoch keine Vertiefungen 252 an dem Ende der schlitzförmigen Aussparungen 251, 258. Stattdessen sind die schlitzförmigen Aussparungen 251, 258 als geradlinig verlaufender Schlitz ausgeführt. Außerdem sind keine Öffnungen 254, 256 vorgesehen.

Der Kabelkanalhalter 2000 gemäß dem vorliegenden Ausführungsbeispiel hat jedoch Laschen 257, die in etwa parallel zu den schlitzförmigen Aussparungen 251, 258 angeordnet sind. Die Laschen 257 sind am Rand der Seite des Kabelkanalhalters 2000 angeordnet, die dem Kabelkanal 30 oder 300 zugewandt ist, wenn der Kabelkanal 30 oder 300 an dem Kabelkanalhalter 2000 montiert ist. Somit sind die Laschen 257 außermittig der schlitzförmigen Aussparungen 251, 258 angeordnet. Die Laschen 257 können in Richtung der Vertiefungen 252 entlang einer Biegelinie gebogen werden, die in etwa vertikal zu den schlitzförmigen Aussparungen 251, 258 angeordnet ist. Dadurch können die Laschen 257 auch jeweils in Richtung der Montageeinheit 21 an dem Kabelkanalhalter 200 gebogen werden.

Gemäß Fig. 15 und Fig. 16 kann auch an dem Kabelkanalhalter 2000 ein Kabelkanal 30 montiert werden. Ebenso ist an dem Kabelkanalhalter 2000 eine Montage eines Kabelkanals 300 möglich, auch wenn dies in den Figuren nicht gezeigt ist.

Somit ist die Transporteinrichtung 1 auch bei dem dritten Ausführungsbeispiel auf die gleiche Weise ausgeführt, wie zuvor in Bezug auf das erste und zweite Ausführungsbeispiel beschrieben.

Alle zuvor beschriebenen Ausgestaltungen der Transporteinrichtung 1, der Kabelkanalhalter 20, 200, 2000 und des Verfahrens können einzeln oder in allen möglichen Kombinationen Verwendung finden. Insbesondere können Merkmale auch weglassen werden, solange sie nicht als wesentlich für die Erfindung beschrieben sind. Zudem sind die Merkmale aller beschriebenen Ausführungsbeispiele beliebig kombinierbar. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Transporteinrichtung 1 muss kein Transportband aufweisen. Alternativ oder zusätzlich kann die Transporteinrichtung 1 ein Karussell aufweisen, mit welchem die Behälter 5 auf einer Kreisbahn transportierbar sind. Auch an dem Karussell sind die Kabelkanalhalter 20, 200, 2000 einfach montierbar, da die verschiedenen Abstände zur Transporteinrichtung 1 abdeckbar sind, wie sie beispielsweise an Kurven auftreten.

Die Transportebene der Transporteinrichtung 1 muss nicht horizontal angeordnet sein. Die Transportebene kann also auch geneigt zur Horizontalen angeordnet sein.

In der Transporteinrichtung 1 können je nach Verfügbarkeit verschiedene Kabelkanalhaltern 20, 200, 2000 für die Montage eines der Kabelkanäle 30, 3000 zum Einsatz kommen.

Es ist sehr einfach möglich, die Anordnung der schlitzförmigen Aussparungen 251, 258 oder Laschen 253, 255, 257 je nach Bedarf an die zu montierenden Kabelkanäle 30, 300 anzupassen. Somit kann flexibel auf die jeweils vorhandenen örtlichen Gegebenheiten zur Montage der Transporteinrichtung 1 reagiert werden.

Es ist außerdem möglich, bei den Kabelkanalhaltern 20, 200, 2000 je nach Bedarf mindestens eine der schlitzförmigen Aussparungen 251, 258 mit einer Vertiefung 252 auszustatten, wie bei den Kabelkanalhaltern 20, 200 gezeigt und beschrieben. Zusätzlich kann an demselben Kabelkanalhalter 20, 200, 2000 auch mindestens eine der schlitzförmigen Aussparungen 251, 258 ohne Vertiefung 252 vorgesehen sein, wie bei den Kabelkanalhaltern 20, 200 gezeigt und beschrieben.

Außerdem ist es denkbar, mindestens zwei verschiedene der gezeigten Formen für die Laschen 253, 255, 257 an den Kabelkanalhaltern 20, 200, 2000 beliebig zu kombinieren.

### Bezugszeichenliste

- 1: Transporteinrichtung
- 5: Behälter
- 6: Behälterverschluss
- 10: Gestell
- 11, 12: Geländer
- 13: Haltestange
- 14: Geländerpfosten
- 15: Geländerhalter
- 15A: erste Schraubbefestigung
- 15B: zweite Schraubbefestigung
- 16, 17: Träger
- 18: Umlenkrolle
- 19: Transportband20 Kabelkanalhalter
- 21: Montageeinheit
- 25: Halteeinheit
- 30: Kabelkanal
- 31, 32: Gitterstab
- 34: elektrisches Kabel oder Leitung
- 35: Trennsteg
- 37,38: Clip
- 37A: Leitung
- 150: Grundkörper
- 151: Öffnung
- 152: Pfostenaufnahmeöffnung
- 153: schlitzförmige Aussparung
- 154, 157: Schraube
- 155, 158: Beilagscheibe
- 156, 159: Schraubenmutter
- 211,213,215: Haken
- 212,214,216: Aussparung
- 251, 258: schlitzförmige Aussparung
- 252: Vertiefung
- 253, 255, 257: Lasche
- 254,256: Öffnung
- 370: Clip
- 371,372: Clipshaken
- 373: Leitungsaufnahme
- 380: Grundkörper
- 381, 382, 383, 384: Vorsprung
- 385, 386: Aussparung für Gitterstab
- 387: Leitungsaufnahme
- TR: Transportrichtung

## Patentansprüche

1. Transporteinrichtung (1) zum Transport von Behältern (5) oder Behälterverschlüssen (6), mit
einem Gestell (10),
einem Transportelement (11, 12; 19) zum Kontaktieren mindestens eines Teils der Behälter (5) oder Behälterverschlüsse (6) zumindest abschnittsweise oder zeitweise bei deren Transport in einer vorbestimmten Transportrichtung (TR), wobei das Transportelement (11, 12; 19) an dem Gestell (10) gestützt ist, und
mindestens einem Kabelkanalhalter (20; 200; 2000) zum Halten eines Kabelkanals (30; 300),
wobei der mindestens eine Kabelkanalhalter (20; 200; 2000) zur werkzeuglosen Montage des Kabelkanalhalters (20; 200; 2000) an dem Gestell (10) der Transporteinrichtung (1) ausgestaltet ist, indem der Kabelkanalhalter (20; 200; 2000) eine Montageeinheit (21) aufweist zur formschlüssigen Aufnahme eines entsprechend geformten Teils des Gestells (10),
wobei der mindestens eine Kabelkanalhalter (20; 200; 2000) im montierten Zustand am Gestell (10) vertikal ausgerichtet ist und eine U-Form hat, die einen Boden und zwei Schenkel hat, und zur werkzeuglosen Aufnahme des Kabelkanals (30; 300) ausgestaltet ist, indem der Kabelkanalhalter (20; 200; 2000) mindestens eine Halteeinheit (25) aufweist zur Aufnahme des Kabelkanals (30; 300) in einer schlitzförmigen Aussparung (251; 258), die in dem Boden und den zwei Schenkeln der U-Form des Kabelkanalhalters (20; 200; 2000) angeordnet ist, und
wobei an dem Boden und den zwei Schenkeln der U-Form des Kabelkanalhalters (20; 200; 2000) mindestens zwei der Halteeinheiten (25) angeordnet sind, und
wobei die Montageeinheit (21) an den zwei Schenkeln der U-Form des Kabelkanalhalters (20; 200; 2000) angeordnet ist.

2. Transporteinrichtung (1) nach Anspruch 1,
wobei der Kabelkanal (30; 300) eine vorbestimmte Kabelkanalgeometrie hat,
wobei der Kabelkanalhalter (20; 200; 2000) zur werkzeuglosen Montage von mindestens zwei verschiedenen Kabelkanalgeometrien und/oder zur werkzeuglosen Montage mindestens einer Kabelkanalgeometrie in unterschiedlichen Höhen an dem Kabelkanalhalter (20; 200; 2000) und zum Transportelement (11, 12; 19) ausgestaltet ist, und
wobei der Kabelkanalhalter (20; 200; 2000) derart ausgestaltet ist, dass Anzahl, Breite und Abstand der Aussparungen (251; 258) des Kabelkanalhalters (20; 200; 2000) die Anzahl der Kabelkanäle (30; 300) mit verschiedenen Kabelkanalgeometrien bestimmt, die mit dem Kabelkanalhalter (20; 200; 2000) aufgenommen werden können.

3. Transporteinrichtung (1) nach Anspruch 1, wobei der Kabelkanalhalter (20; 200; 2000) für die werkzeuglose Montage zur formschlüssigen Aufnahme des Teils (15A, 15B) des Gestells (10) in mindestens einer Achse des Gestells (10) ausgestaltet ist.

4. Transporteinrichtung (1) nach Anspruch 3, wobei der Kabelkanalhalter (20; 200; 2000) derart ausgestaltet ist, dass die formschlüssige Aufnahme durch ein Einhängen an dem Gestell (10) erfolgt, so dass eine Bewegung des Kabelkanalhalters (20; 200; 2000) und/oder des Kabelkanals (30; 300) nur in der Achse des Gestells (10) möglich ist.

5. Transporteinrichtung (1) nach Anspruch 4, wobei die Montageeinheit (21) im Wesentlichen eine Negativform des geformten Teils des Gestells (10) aufweist, an dem die Montageeinheit (21) zum Bilden eines Formschlusses zur formschlüssigen Aufnahme einzuhängen ist.

6. Transporteinrichtung (1) nach einem der vorangehenden Ansprüche, wobei die Montageeinheit (21) eine Aussparung (212; 214; 216) zur formschlüssigen Aufnahme einer Beilagscheibe (155; 158) oder einer Schraube (154; 157) oder Schraubenmutter (156; 159) einer Schraubbefestigung (15A, 15B) für einen Geländerpfosten (14) an dem Gestell (10) aufweist.

7. Transporteinrichtung (1) nach einem der vorangehenden Ansprüche, wobei die Montageeinheit (21) an einer ersten Seite des Kabelkanalhalters (20; 200; 2000) angeordnet ist, die von einer zweiten Seite des Kabelkanalhalters (20; 200; 2000) abgewandt ist, an der die mindestens zwei Halteeinheiten (25) angeordnet sind.

8. Transporteinrichtung (1) nach einem der vorangehenden Ansprüche, wobei der Kabelkanalhalter (20; 200; 2000) aus einem Stück Blech gebogen ist.

9. Transporteinrichtung (1) nach einem der vorangehenden Ansprüche,
wobei die Montageeinheit (21) in Bezug auf die Längsrichtung des Kabelkanalhalters an einem Ende des Kabelkanalhalters (20; 200; 2000) angeordnet ist, und
wobei die mindestens zwei Halteeinheiten (25) in Bezug auf die Längsrichtung an dem anderen Ende des Kabelkanalhalters (20; 200; 2000) angeordnet sind.

10. Transporteinrichtung (1) nach Anspruch 9, wobei die Montageeinheit (21) aufweist ein erstes Paar von Haken (211, 213), die in einer ersten Richtung nebeneinander angeordnet sind und zur formschlüssigen Aufnahme eines Teils des Gestells (10) ausgestaltet sind, und zumindest einen weiteren Haken (215), der in einer zweiten Richtung, die sich von der ersten Richtung unterscheidet, neben dem ersten Paar von Haken angeordnet ist und zur formschlüssigen Aufnahme eines Teils des Gestells (10) ausgestaltet sind,
wobei die Haken (211, 213; 215) beabstandet voneinander an dem einen Ende des Kabelkanalhalters (20; 200; 2000) angeordnet sind.

11. Transporteinrichtung (1) nach einem der vorangehenden Ansprüche,
wobei verschieden geformte Halteeinheiten (25) vorhanden sind, die beabstandet voneinander in einer Reihe nebeneinander an dem Kabelkanalhalter (20; 200; 2000) angeordnet sind, und/oder
wobei eine Halteeinheit (25) eine schlitzförmige Aussparung (251; 258) aufweist, die eine Lasche (253; 255; 257) aufweist und/oder die an ihren beiden Enden eine Vertiefung (252) aufweist, und/oder
wobei eine Halteeinheit (25) eine ovale oder runde Öffnung (254; 256) aufweist, die benachbart zu einer schlitzförmigen Aussparung (251; 258) an dem Kabelkanalhalter (20; 200; 2000) angeordnet ist zur Befestigung weiterer Elemente an dem Kabelkanalhalter (20; 200; 2000).

12. Transporteinrichtung (1) nach einem der vorangehenden Ansprüche, zudem mit
einem Kabelkanal (30; 300), der von dem mindestens einen Kabelkanalhalter (20; 200; 2000) gehalten wird und zur Aufnahme eines elektrischen Kabels oder Leitung (34) ausgestaltet ist, und
mindestens einem Clip (37), der zur Aufnahme einer Leitung (37A) zur Führung eines flüssigen oder gasförmigen Mediums an dem Kabelkanal (30; 300) ausgestaltet ist,
wobei der mindestens eine Clip (37) zum werkzeuglosen Montieren an dem Kabelkanal (30; 300) ausgestaltet ist

13. Transporteinrichtung (1) nach Anspruch 12, wobei der mindestens eine Clip (37) derart an den Kabelkanal (30; 300) angepasst ist, dass der Clip (37) entlang des Kabelkanals (30; 300) an dem Kabelkanal (30; 300) verschiebbar ist oder nicht verschiebbar ist.

14. Transporteinrichtung (1) nach Anspruch 12, wobei der mindestens eine Clip (37) zwei Clipshaken (371, 372) aufweist, die zur werkzeuglosen Montage des Clips (37) an dem Kabelkanal (30; 300) ausgestaltet sind.

15. Verfahren zur Montage eines Kabelkanals (30; 300) an einer Transporteinrichtung (1), die zum Transport von Behältern (5) oder Behälterverschlüssen (6) ausgestaltet ist und die ein Gestell und ein Transportelement (11, 12; 19) aufweist zum Kontaktieren mindestens eines Teils eines Behälters (5) oder Behälterverschlusses zumindest abschnittsweise oder zeitweise bei deren Transport in einer vorbestimmten Transportrichtung (TR), wobei das Transportelement (11, 12; 19) an dem Gestell (10) gestützt ist, mit den Schritten werkzeugloses Montieren eines Kabelkanalhalters (20; 200; 2000) an dem Gestell (10) der Transporteinrichtung (1), wobei der Kabelkanalhalter (20; 200; 2000) im montierten Zustand vertikal ausgerichtet ist und zur werkzeuglosen Montage des Kabelkanalhalters (20; 200; 2000) an dem Gestell (10) der Transporteinrichtung (1) ausgestaltet ist, indem der Kabelkanalhalter (20; 200; 2000) eine Montageeinheit (21) aufweist zur formschlüssigen Aufnahme eines entsprechend geformten Teils des Gestells (10), und werkzeugloses Montieren des Kabelkanals (30; 300) an dem Kabelkanalhalter (20; 200; 2000), der eine U-Form hat, die einen Boden und zwei Schenkel hat, und zur werkzeuglosen Aufnahme des Kabelkanals (30; 300) ausgestaltet ist, indem der Kabelkanal (30; 300) in mindestens einer Halteeinheit (25) aufgenommen wird, die den Kabelkanal (30; 300) in einer schlitzförmigen Aussparung (251; 258) aufnimmt, die in dem Boden und den zwei Schenkeln der U-Form des Kabelkanalhalters (20; 200; 2000) angeordnet ist, und
wobei an dem Boden und den zwei Schenkeln der U-Form des Kabelkanalhalters (20; 200; 2000) mindestens zwei der Halteeinheiten (25) angeordnet sind, und
wobei die Montageeinheit (21) an den zwei Schenkeln der U-Form des Kabelkanalhalters (20; 200; 2000) angeordnet ist.

## Claims

1. A conveying device (1) for conveying containers (5) or container closures (6), comprising
a frame (10),
a conveying element (11, 12; 19) for making contact with at least one part of the containers (5) or container closures (6), at least in some sections or temporarily, while they are conveyed in a predefined conveying direction (TR), the conveying element (11, 12; 19) being supported on the frame (10), and
at least one cable conduit holder (20; 200; 2000) for holding a cable conduit (30; 300),
wherein the at least one cable conduit holder (20; 200; 2000) is configured to mount the cable conduit holder (20; 200; 2000) on the frame (10) of the conveying device (1) without tools in that the cable conduit holder (20; 200; 2000) comprises a mounting unit (21) for the form-closed accommodation of a correspondingly formed part of the frame (10)
wherein the at least one cable conduit holder (20; 200; 2000) is vertically aligned in a state mounted at the frame (10) and has a U-shape, which has a bottom and two legs, and is configured to accommodate the cable conduit (30; 300) without tools in that the cable conduit holder (20; 200; 2000) comprises at least one holding unit (25) for accommodating the cable conduit (30; 300) in a slot-shaped recess (251; 258) which is positioned in the bottom and the two legs of the U-shape of the cable conduit holder (20; 200; 2000), and
wherein at least two of the holding units (25) are positioned at the bottom and the two legs of the U-shape of the cable conduit holder (20; 200; 2000), and
wherein the mounting unit (21) is positioned at the two legs of the U-shape of the cable conduit holder (20; 200; 2000).

2. The conveying device (1) according to claim 1,
wherein the cable conduit holder (20; 200; 2000) has a predetermined cable conduit geometry,
wherein the cable conduit holder (20; 200; 2000) is configured for mounting without tools of at least two different cable conduit geometries and / or for mounting without tools of at least one cable conduit geometry at different heights on the cable conduit holder (20; 200; 2000) and to the conveying element (11, 12, 19), and
wherein the cable conduit holder (20; 200; 2000) is configured such that the number, width and distance between the recesses (251; 258) of the cable conduit holder (20; 200; 2000) determines the number of the different cable conduit geometries which can be accommodated by the cable conduit holder (20; 200; 2000).

3. The conveying device (1) according to claim 1, wherein the cable conduit holder (20; 200; 2000) is configured for mounting without tools to provide a form-closed accommodation of the part (15A, 15B) of the frame (10) in at least one axis of the frame (10).

4. The conveying device (1) according to claim 3, wherein the cable conduit holder (20; 200; 2000) is configured such that the form-closed accommodation is effected by fastening on the frame (10), so that a movement of the cable conduit holder (20; 200; 2000) and / or the cable conduit (30; 300) is possible only in the axis of the frame (10).

5. The conveying device (1) according to claim 4, wherein the mounting unit (21) has substantially a counter part of the shaped part of the frame (10) on which the mounting unit (21) is to be fastened for forming a form closure for form-closed accommodation.

6. The conveying device (1) according to one of the preceding claims, wherein the mounting unit (21) comprises a recess (212; 214; 216) for the form-closed accommodation of a washer (155; 158) or a screw (154; 157) or nut (156; 159) of a screw fastener (15A, 15B) for a railing post (14) on the frame (10).

7. The conveying device (1) according to one of the preceding claims, wherein the mounting unit (21) is positioned on a first side of the cable conduit holder (20; 200; 2000), which is averted from a second side of the cable conduit holder (20, 200, 2000), on which the at least two holding units (25) are positioned.

8. The conveying device (1) according to one of the preceding claims, wherein the cable conduit holder (20, 200, 2000) is bent from a piece of sheet metal.

9. The conveying device (1) according to any one of the preceding claims ,
wherein the mounting unit (21) is positioned, in respect to the longitudinal direction of the cable conduit holder (20, 200, 2000), at one end of the cable conduit holder (20; 200; 2000), and
wherein the at least two holding units (25) are positioned, in respect to the longitudinal direction, at the other end of the cable conduit holder (20 ; 200; 2000).

10. The conveying device (1) according to claim 9, wherein the mounting unit (21) comprises
a first pair of hooks (211, 213) which are positioned side by side in a first direction and are configured for a form-closed accommodation of a part of the frame (10), and
at least one further hook (215) which is positioned in a second direction, which differs from the first direction, adjacent to the first pair of hooks and is configured for a form-closed accommodation of a part of the frame (10),
wherein the hooks (211, 213, 215) are positioned spaced from one another at the one end of the cable conduit holder (20; 200; 2000).

11. The conveying device (1) according to any one of the preceding claims,
wherein differently shaped holding units (25) are provided, which are positioned spaced apart from one another in a row next to each other on the cable conduit holder (20; 200; 2000), and / or
wherein a holding unit (25) comprises a slot-shaped recess (251; 258) which comprises a lug (253; 255; 257) and / or which comprises a cavity (252) at its both ends, and / or
wherein a holding unit (25) comprises an oval or round opening (254; 256) which is positioned adjacent to a slot-shaped recess (251; 258) on the cable conduit holder (20; 200; 2000) for attaching further elements to the cable conduit holder (20; 200; 2000).

12. The conveying device (1) according to any one of the preceding claims, further comprising
a cable conduit (30; 300) held by the at least one cable conduit holder (20; 200; 2000) and configured to accommodate an electrical cable or line (34), and
at least one clip (37) configured to accommodate a pipe (37A) for guiding a liquid or gaseous medium on the cable conduit (30; 300),
wherein the at least one clip (37) is configured to be mounted without tools to the cable conduit (30; 300).

13. The conveying device (1) according to claim 12, wherein the at least one clip (37) is adapted to the cable conduit (30; 300) such that the clip (37) is displaceable or is not displaceable along the cable conduit (30; 300) on the cable conduit (30; 300)

14. The conveying device (1) according to claim 12, wherein the at least one clip (37) comprises two clip hooks (371, 372) which are configured for mounting the clip (37) on the cable conduit (30; 300) without tools.

15. Method for mounting a cable conduit (30; 300) on a conveying device (1) which is configured to convey containers (5) or container closures (6) and which comprises a frame (10) and a conveying element (11, 12; 19) for making contact with at least one part of a container (5) or container closure (6), at least in some sections or temporarily, while they are conveyed in a predetermined conveying direction (TR), the conveying element (11, 12; 19) being supported on a frame (10), wherein the conveying element (11, 12; 19) is supported on the frame (10), wherein the method comprises the steps of
mounting, without tools, a cable conduit holder (20; 200; 2000) on the frame (10) of the conveying device (1), wherein the cable conduit holder (20; 200; 2000) is vertically aligned in a state mounted at the frame (10) and is configured for tool-less mounting of the cable conduit holder (20; 200; 2000) on the frame (10) of the conveying device (1) in that the cable conduit holder (20; 200; 2000) comprises a mounting unit (21) for the form-closed accommodation of a correspondingly formed part of the frame (10), and
mounting, without tools, the cable conduit (30; 300) on the cable conduit holder (20; 200; 2000), which has a U-shape, which has a bottom and two legs, and is configured for accommodating the cable conduit (30; 300) without tools in that the cable conduit (30; 300) is accommodated in at least one holding unit (25) which accommodates the cable conduit (30; 300) in a slot-shaped recess (251; 258) which is positioned in the bottom and the two legs of the U-shape of the cable conduit holder (20; 200; 2000), and
wherein at least two of the holding units (25) are positioned at the bottom and the two legs of the U-shape of the cable conduit holder (20; 200; 2000), and
wherein the mounting unit (21) is positioned at the two legs of the U-shape of the cable conduit holder (20; 200; 2000).

## Revendications

1. Dispositif de transport (1) pour transporter des conteneurs (5) ou des fermetures de conteneurs (6), le dispositif de transport comprenant
un cadre (10),
un élément de transport (11, 12; 19) destiné à entrer en contact avec au moins une partie de l'élément de transport récipients (5) ou des fermetures de récipients (6), au moins dans certaines sections ou temporairement, pendant qu'ils sont transportés dans une direction de transport prédéterminée (TR), l'élément de transport (11, 12; 19) étant supporté sur le cadre (10), et
au moins un support de conduit de câbles (20; 200; 2000) pour supporter un conduit de câbles (30; 300),
dans lequel au moins un support de conduit de câbles (20; 200; 2000) est configuré pour monter le support de conduit de câble (20; 200; 2000) sur le cadre (10) du dispositif de transport (1) sans outils, en ce sens que le support de conduit de câbles (20; 200; 2000) comprend une unité de montage (21) pour le logement fermé d'une partie formée correspondante du cadre (10),
dans lequel au moins un support de conduit de câbles (20; 200; 2000) est aligné verticalement en un état monté sur le cadre (10) et ayant une forme en U, avec un fond et deux pieds, et configuré pour recevoir le conduit de câbles (30; 300) sans outils en ce que le support de conduit de câbles (20; 200; 2000) comprend au moins une unité de support (25) pour recevoir le conduit de câbles (30; 300) dans une échancrure (251; 258) en forme de fente qui est positionnée dans le fond et les deux pieds de la forme en U du support de conduit de câbles (20; 200; 2000), et
dans lequel au moins deux des unités de support (25) sont positionnées à la base et aux deux pieds de la forme en U du support de conduit de câbles (20; 200; 2000), et
dans lequel l'unité de montage (21) est positionnée sur les deux pieds de la forme en U du support de conduit de câbles (20; 200; 2000).

2. Dispositif de transport (1) selon la revendication 1,
dans lequel le support de conduit de câbles (20; 200; 2000) a une géométrie de câble prédéterminée,
dans lequel le support de conduit de câbles (20; 200; 2000) est configuré pour être monté sans outils d'au moins deux géométries différentes de conduits de câbles et/ou pour être monté sans outils d'au moins une géométrie de conduit de câbles à différentes hauteurs sur le support de conduit de câbles (20; 200; 2000) et sur l'élément de transport (11, 12, 19), et
dans lequel le support de conduit de câbles (20; 200; 2000) est configuré de telle sorte que le nombre, la largeur et la distance entre les échancrures (251; 258) du support de conduit de câbles (20; 200; 2000) détermine le nombre de géométries différentes de conduits de câbles que peut accueillir le support de conduits de câbles (20; 200; 2000).

3. Dispositif de transport (1) selon la revendication 1, dans lequel le support de conduit de câble (20; 200; 2000) est configuré pour être monté sans outils afin de fournir une forme fermée de la réception de la partie (15A, 15B) du cadre (10) dans au moins un axe du cadre (10).

4. Dispositif de transport (1) selon la revendication 3, dans lequel le support de conduit de câbles (20; 200; 2000) est configuré de manière à ce que le logement fermé soit effectué par fixation sur le cadre (10), de sorte qu'un mouvement du support de conduit de câble (20; 200; 2000) et/ou du conduit de câble (30; 300) ne soit possible que dans l'axe du cadre (10).

5. Dispositif de transport (1) selon la revendication 4, dans lequel l'unité de montage (21) comporte substantiellement une contrepartie de la partie formée du cadre (10) sur laquelle l'unité de montage (21) doit être fixé pour former une fermeture de forme pour une réception fermé par une forme.

6. Dispositif de transport (1) selon l'une des revendications précédentes, dans lequel l'unité de montage (21) comprend une cavité (212; 214; 216) pour la réception fermé par la forme d'une rondelle (155; 158) ou d'une vis (154; 157) ou d'un écrou (156; 159) d'une vis de fixation (15A, 15B) pour un poteau de garde-corps (14) sur le cadre (10).

7. Dispositif de transport (1) selon l'une des revendications précédentes, dans lequel l'unité de montage (21) est positionnée sur un premier côté du support de conduit de câble (20; 200; 2000), qui se trouve à l'opposé d'un deuxième côté du support de conduit de câbles (20, 200, 2000), sur lequel sont positionnées les au moins deux unités de support (25).

8. Dispositif de transport (1) selon l'une des revendications précédentes, dans lequel le support de conduit de câbles (20, 200, 2000) est plié à partir d'une pièce de tôle.

9. Dispositif de transport (1) selon l'une quelconque des revendications précédentes,
dans lequel l'unité de montage (21) est positionnée, par rapport à la direction longitudinale du support de conduit de câbles (20, 200, 2000), à une extrémité du support de conduit de câbles (20; 200; 2000), et
dans lequel les au moins deux unités de support (25) sont positionnées, par rapport à la direction longitudinale, à l'autre extrémité du support de conduit de câbles (20; 200; 2000).

10. Dispositif de transport (1) selon la revendication 9, dans lequel l'unité de montage (21) comprend
une première paire de crochets (211, 213) positionnés côte à côte dans une première direction et configurés pour une réception fermée d'une partie du cadre (10), et
au moins un autre crochet (215) positionné dans une seconde direction, différente de la première direction, adjacente à la première paire de crochets et configuré pour un réception fermé d'une partie du cadre (10),
dans lequel les crochets (211, 213, 215) sont positionnés à distance les uns des autres à l'une des extrémités du support de conduit de câbles (20; 200; 2000).

11. Dispositif de transport (1) selon l'une quelconque des revendications précédentes,
dans lequel des unités de support (25) de forme différente sont disponible, qui sont positionnées à distance les unes des autres dans une rangée à côté les unes des autres sur le support de conduit de câble (20; 200; 2000), et / ou
dans lequel une unité de support (25) comprend une échancrure (251; 258) en forme de fente qui comprend un ergot (253; 255; 257) et / ou qui comprend une l'empreinte (252) à ses deux extrémités, et / ou
dans lequel une unité de support (25) comprend une ouverture (254; 256) ovale ou ronde qui est positionnée à côté d'une échancrure (251; 258) en forme de fente sur le support de conduit de câbles (20; 200; 2000) pour fixer d'autres éléments au support de conduit de câbles (20; 200; 2000).

12. Dispositif de transport (1) selon l'une quelconque des revendications précédentes, comprenant en outre
un conduit de câbles (30; 300) supporté par au moins un support de conduit de câbles (20; 200; 2000) et configuré pour recevoir un câble ou une ligne électrique (34), et
au moins un clip (37) configuré pour recevoir un tuyau (37A) destiné à guider un liquide ou une substance gazeux sur le conduit de câble (30; 300),
dans lequel l'au moins un clip (37) est configuré pour être monté sans outils sur le conduit de câbles (30; 300).

13. Dispositif de transport (1) selon la revendication 12, dans lequel l'au moins un clip (37) est adapté au conduit de câbles (30; 300) de sorte que le clip (37) soit déplaçable ou non le long du conduit de câbles (30; 300) sur le conduit de câbles (30; 300).

14. Dispositif de transport (1) selon la revendication 12, dans lequel l'au moins un clip (37) comprend deux crochets de clip (371,372) configurés pour monter le clip (37) sur le conduit de câbles (30; 300) sans outils.

15. Procédé de montage d'un conduit de câbles (30; 300) sur un dispositif de transport (1) configuré pour transporter des conteneurs (5) ou des fermetures de conteneurs (6) et comprenant un cadre (10) et un élément de transport (11, 12; 19) destiné à entrer en contact avec au moins une partie d'une contenant (5) ou fermeture de contenant (6), au moins dans certaines sections ou temporairement, pendant qu'ils sont transportés dans une direction de transport prédéterminée (TR), l'élément de transport (11, 12; 19) étant supporté sur un cadre (10), dans lequel l'élément de transport (11, 12; 19) est supporté sur le cadre (10), dans lequel le procédé comprend les étapes suivantes,
monter, sans outils, d'un support de conduit de câbles (20; 200; 2000) sur le cadre (10) de le dispositif de transport (1), dans lequel le support de conduit de câbles (20; 200; 2000) est aligné verticalement en un état monté sur le cadre (10) et est configuré pour le montage sans outil du support de conduit de câbles (20; 200; 2000) sur le cadre (10) du dispositif de transport (1) en ce que le support de conduit de câbles (20; 200; 2000) comprend une unité de montage (21) pour recevoir de forme fermée d'une partie formée correspondante du cadre (10), et
monter, sans outil, le conduit de câbles (30; 300) sur le support de conduit de câbles (20; 200; 2000), qui a une forme de U, qui a un fond et deux pieds, et qui est configuré pour recevoir le conduit de câbles (30; 300) sans outil en ce que le conduit de câbles (30; 300) est reçu dans au moins une unité de support (25) qui reçoit le conduit de câbles (30; 300) dans un échancrure (251; 258) en forme de fente qui est positionné dans le fond et dans les deux pieds branches de la forme en U du support de conduit de câbles (20; 200; 2000), et
dans lequel au moins deux des unités de support (25) sont positionnées à la base et aux deux pieds de la forme en U du support de conduit de câbles (20; 200; 2000), et
dans lequel l'unité de montage (21) est positionnée sur les deux pieds de la forme en U du support de conduit de câbles (20; 200; 2000).
